# EUROPÄISCHE PATENTSCHRIFT

(11) **EP 2 438 327 B1**
(45) Veröffentlichungstag und Bekanntmachung des Hinweises auf die Patenterteilung: **21.08.2013**
(21) Anmeldenummer: 11725936.6
(22) Anmeldetag: 17.06.2011
(51) Int. Cl.: F16H 57/04, F16H 57/08

(54) **PLANETENBOLZEN, PLANETENTRÄGER, PLANETENGETRIEBE UND VERFAHREN ZUR DREHFESTEN BEFESTIGUNG EINES PLANETENBOLZENS AN EINEN PLANETENTRÄGER**
PLANETARY PIN, PLANETARY CARRIER, PLANETARY GEAR MECHANISM, AND METHOD FOR THE ROTATIONALLY FIXED FASTENING OF A PLANETARY PIN TO A PLANETARY CARRIER
BOULON DE SATELLITE, PORTE-SATELLITES, BOÎTE DE VITESSES À TRAINS ÉPICYCLOÏDAUX ET PROCÉDÉ POUR FIXER DE MANIÈRE SOLIDAIRE EN ROTATION UN BOULON DE SATELLITE SUR UN PORTE-SATELLITES

(30) Priorität: 18.06.2010 DE 102010017463
(43) Veröffentlichungstag der Anmeldung: 11.04.2012
(73) Patentinhaber: Eickhoff Antriebstechnik GmbH, 44789 Bochum (DE)
(72) Erfinder: LUBENOW, Kai, 44795 Bochum (DE); HANOWSKI, Reinhold, 45549 Sprockhövel (DE); GRÖNE, Jochen, 44789 Bochum (DE)
(74) Vertreter: Vogel, Andreas
(86) Internationale Anmeldenummer: PCT/EP2011/060171
(87) Internationale Veröffentlichungsnummer: WO 2011/157844

(56) Entgegenhaltungen:
- EP-A2- 1 431 575
- DE-A1-102007 028 896
- DE-U1-202005 013 329

## Beschreibung

Die Erfindung betrifft einen Planetenbolzen zur Anordnung eines Planetenrades an einen Planetenträger mit zwei Wangen sowie einen Planetenträger eines Planetengetriebes, der zur drehfesten Aufnahme wenigstens eines Planetenbolzens, an dem über ein Lager ein Planetenrad drehbar angeordnet ist, ausgebildet ist, wobei der Planetenträger eine erste und eine zweite Wange aufweist. Ferner betrifft die Erfindung ein Planetengetriebe mit einem Sonnenrad, einem Hohlrad und wenigstens einem zwischen dem Sonnenrad und dem Hohlrad drehbar angeordneten Planetenrad, wobei das wenigstens eine Planetenrad über ein Lager an einem Planetenbolzen drehbar gelagert ist, der an einem Planetenträger des Planetengetriebes drehfest befestigt ist, sowie ein Verfahren zur drehfesten Befestigung eines Planetenbolzens an einen Planetenträger, der eine erste und eine zweite Wange aufweist, wobei die erste Wange eine erste Kegelbohrung und die zweite Wange eine zweite Kegelbohrung aufweist und wobei die zweite Kegelbohrung in der zweiten Wange einen größeren Durchmesser als die erste Kegelbohrung der ersten Wange aufweist. Die DE 10 2007 028896 A1 zeigt einen Planetenbolzen, einen Planetenträger und ein Verfahren gemäß dem Oberbegriff der Ansprüchen 1, 8 und 11.

Planetengetriebe, auch als Umlaufrädergetriebe bezeichnet, werden in vielen verschiedenen technischen Anwendungen eingesetzt. Insbesondere finden Planetengetriebe in Automatik- oder Lastschaltgetrieben Verwendung. Sie bestehen aus einem zentralen Sonnenrad, einem konzentrisch dazu angeordneten Hohlrad und wenigstens einem Planetenrad, das zwischen dem Sonnenrad und dem Hohlrad angeordnet ist. Insbesondere weisen Planetengetriebe zwei bis vier Planentenräder zwischen dem Sonnenrad und dem Hohlrad auf. Die Drehachsen der Planetenräder sind parallel, aber mit Achsabstand zu der Drehachse des Sonnenrades beziehungsweise des Hohlrades ausgerichtet. Die Verzahnung der Planetenräder steht im ständigen Eingriff mit der Verzahnung des Sonnen- beziehungsweise des Hohlrades. Die Planetenräder sind an einem Planetenträger, auch als Planetenradträger bezeichnet, drehbar gelagert. Das Sonnenrad, das Hohlrad und der Planetenträger dienen zur Veränderung eines Übersetzungsverhältnisses. Dabei können das Sonnenrad, das Hohlrad und der Planetenträger sowohl angetrieben als auch festgebremst werden. Der Abtrieb eines Planetengetriebes erfolgt in der Regel entweder über das Hohlrad oder über den Planetenträger.

Derartige Planetengetriebe werden beispielsweise im Offshorebereich der Öl- oder Gasindustrie, der Windkraftindustrie oder der Schifffahrt eingesetzt. Der Antrieb eines Planetengetriebes einer Windkraftanlage erfolgt beispielsweise über einen im Wind stehenden Rotor. Der Rotor dreht eine Rotorwelle. Die Rotorwelle überträgt die Drehbewegung beispielsweise auf einen Planetenträger. Der Planetenträger weist Planetenbolzen auf, die sich parallel zur Drehachse des Planetenträgers erstrecken. Die Planetenbolzen sind in den Planetenträger eingeschrumpft und bleiben daher bei Betrieb des Planetengetriebes gegenüber dem Planetenträger unbewegt. Mittels eines Lagers, eines so genannten Planetenlagers, ist auf jedem Planetenbolzen ein Planetenrad drehbar gelagert. Dabei können die Planetenräder grad- oder schrägverzahnt sein. In einem ersten Zahneingriff kämmen die Planetenräder das um die Planetenräder angeordnete Hohlrad. In einem zweiten Zahneingriff kämmen die Planetenräder das zwischen den Planetenrädem angeordnete Sonnenrad. Bei Antrieb des Planetenträgers durch die Rotorwelle führen die Planetenräder eine Planetenbewegung aus. Das Hohlrad ist vorzugsweise gehäusefest angeordnet, so dass bei einer Drehung der Planetenräder das Sonnenrad gedreht wird. Das Sonnenrad ist mit einer sogenannten Sonnenwelle verbunden, die den Abtrieb des Planetengetriebes bildet. Ein derartiges Planetengetriebe ermöglicht die Wandlung der Drehzahl.

Dadurch, dass die Planetenbolzen der Planetenräder in den Planetenträger beziehungsweise in Bolzenbohrungen des Planetenträgers eingeschrumpft sind, ist neben der Erstmontage der Planetenräder an den Planetenträger insbesondere ein Austausch eines oder mehrerer defekter. Planetenräder oder Planetenradlager schwierig. Die eingeschrumpften Planetenbolzen sind nur unter erheblichen Kraftaufwand aus dem Planetenträger, das heißt den Bolzenbohrungen, entfernbar. Hierzu sind bei großen Planetengetriebe entsprechend große Hydraulikzylinder erforderlich, die koaxial zu den Planetenrädern beziehungsweise den Planetenbolzen der Planetenräder anzuordnen sind, um die Planetenbolzen aus den Bolzenbohrungen des Planetenträgers zu entfernen, insbesondere herauszuziehen. Das heißt, neben den erforderlichen mechanischen Hilfsmitteln, wie beispielsweise einem Hydraulikzylinder, ist insbesondere ein hoher Platzbedarf erforderlich, um die mechanischen Hilfsmitteln axial zu den Planetenrädern beziehungsweise den Planetenbolzen der Planetenräder anzuordnen, um die Demontage der Bauteile voneinander und die Montage neuer Bauteil aneinander zu bewerkstelligen. Dies ist insbesondere dann schwierig, wenn die Planetengetriebe in Anlagen eingebaut sind, die generell schwer zugänglich sind. So ist beispielsweise die Demontage beziehungsweise Montage eines Planetenrades oder eines Planetenträgers eines in einer Windkraftanlage eingebauten Planetengetriebes extrem schwierig zu realisieren, da zum einen die erforderlichen Hilfsmittel, wie beispielsweise ein Hydraulikzylinder, zu dem Planetengetriebe, beispielsweise in eine Höhe von 70-100 Meter, zu befördern sind und zum anderen in einer derartigen Windkraftanlage kaum Platz zur richtigen Positionierung derartiger mechanischer Hilfsmittel vorhanden ist.

Daher ist es Aufgabe der Erfindung, einen Planetenbolzen eines Planetenrades, einen Planetenträger und ein Planetengetriebe zu schaffen, die eine einfache, platzsparende und kostengünstige Montage und Demontage eines Planetenbolzens und damit eines Planetenrades an einen Planetenträger eines Planetengetriebes ermöglichen. Ferner soll ein Verfahren zur einfachen, platzsparenden und kostengünstigen Montage und Demontage eines Planetenbolzens und damit eines Planetenrades an einen Planetenträger eines Planetengetriebes geschaffen werden.

Diese Aufgaben werden erfindungsgemäß durch einen Planetenbolzen mit den Merkmalen gemäß dem unabhängigen Patentanspruch 1, durch einen Planetenträger eines Planetengetriebes mit den Merkmalen gemäß dem unabhängigen Patentanspruch 8, durch ein Planetengetriebe mit den Merkmalen gemäß Patentanspruch 10 sowie durch ein Verfahren zur drehfesten Befestigung eines Planetenbolzens eines Planetenrades eines Planetengetriebes an einen Planetenträger mit den Merkmalen gemäß Patentanspruch 11 gelöst. Weitere Merkmale und Details der Erfindung ergeben sich aus den Unteransprüchen, der Beschreibung und der Zeichnung. Dabei gelten Merkmale und Details, die im Zusammenhang mit dem erfindungsgemäßen Planetenbolzen beschrieben sind, selbstverständlich auch im Zusammenhang mit dem erfindungsgemäßen Planetenträger, dem erfindungsgemäßen Planetengetriebe sowie dem erfindungsgemäßen Verfahren und jeweils umgekehrt, so dass bezüglich der Offenbarung zu den einzelnen Erfindungsaspekten stets wechselseitig Bezug genommen wird.

Gemäß dem ersten Aspekt der Erfindung werden die Aufgaben durch einen Planetenbolzen zur Anordnung eines Planetenrades an einen Planetenträger mit zwei Wangen, wobei der Planetenbolzen kegelstumpfförmig ausgebildet ist und wobei der Planetenbolzen an seinem aufgeweiteten Ende eine stufenförmige Verjüngung zur Aufnahme eines umlaufenden Verbindungselementes aufweist, gelöst, wobei das Verbindungselement als Sicherungselement wirken kann.

Ein derartig ausgebildeter Planetenbolzen kann einfach, platzsparend und kostengünstig an einen Planetenträger eines Planetengetriebes, der zwei Wangen aufweist, die insbesondere parallel zueinander angeordnet sind, montiert und demontiert werden. Platzsparend bedeutet hierbei, dass zur Befestigung des Planetenbolzens relativ wenig Platz für Montagehilfsmittel erforderlich ist. Die Befestigung eines kegelstumpfförmig ausgebildeten Planetenbolzens war bis dato schwierig beziehungsweise konnte bei Planetenträgern mit zwei Wangen gar nicht in Betracht gezogen werden, da in der Regel zwischen dem Planetenbolzen und den Kegelbohrungen in den beiden Wangen des Planetenträgers unterschiedliche Toleranzen vorherrschen. Das heißt, es ist kaum möglich, die Kegelbohrungen in den Wangen des Planetenträgers, die aufgrund der kegelstumpfförmigen Gestalt des Planetenbolzens unterschiedliche Durchmesser aufweisen, derartig herzustellen, dass der Planetenbolzen nach dessen Einführung in die Kegelbohrungen gleich fest in beiden Kegelbohrungen eingepresst sitzt.

Der erfindungsgemäße Planetenbolzen ermöglicht dagegen, dass dieser in beiden Wangen des Planetenträgers beziehungsweise in den Kegelbohrungen der beiden Wangen des Planetenträgers gleich fest eingepresst werden kann, so dass eine gleiche Vorspannung zwischen den beiden Wangen und dem Planetenbolzen vorliegt. Die spezielle Gestalt des Planetenbolzens ermöglicht, dass dieser sicher an einem Planetenträger mit zwei Wangen befestigt werden kann. Der kegelstumpfförmige Planetenbolzen lässt zu, dass die Kegelbohrung in der zweiten Wange des Planetenträgers im Vergleich zur Kegelbohrung in der ersten Wange des Planetenträgers nicht passgenau gefertigt werden muss. Dies ermöglicht die stufenförmige Verjüngung an dem aufgeweiteten Ende des Planetenbolzens. Durch die Verjüngung an dem breiteren Ende des kegelstumpfförmigen Planetenbolzens, kann der Planetenbolzen zunächst sicher in die Kegelbohrung der ersten Wange eingeführt beziehungsweise eingepasst werden. Das heißt, das verjüngte Ende des Planetenbolzens kann mittels eines Kegelpressverbandes an der ersten Wange des Planetenträgers befestigt werden. Der Planetenbolzen ist bevorzugt derart ausgebildet, dass die stufenförmige Verjüngung des aufgeweiteten Endes des Planetenbolzens, nach der Erzeugung des Kegelpressverbandes zwischen dem verjüngten Ende des Planetenbolzens und der ersten Wange des Planetenträgers, genau in der Kegelbohrung der zweiten Wange des Planetenträgers einliegt. Durch die Verjüngung am Ende des breiter werdenden Teils des Planetenbolzens ist der Planetenbolzen beabstandet zu der Innenwandung der Kegelbohrung der zweiten Wange angeordnet. In dieses Spiel zwischen der stufenförmigen Verjüngung des aufgeweiteten Endes des Planetenbolzens und der Innenwandung der Kegelbohrung der zweiten Wange kann ein umlaufendes Verbindungselement, wie eine Kegelbüchse, eingebracht werden, um ebenfalls einen Pressverband zu erzeugen. Dabei kann das umlaufende Verbindungselement derart auf die stufenförmige Verjüngung beziehungsweise zwischen die stufenförmige Verjüngung und die Kegelbohrung der zweiten Wange des Planetenträgers eingebracht werden, dass der entstehende Pressverband eine gleich große Vorspannung aufweist, wie bei dem Pressverband zwischen dem verjüngten Ende des Planetenbolzens und der Kegelbohrung der ersten Wange des Planetenträgers.

Die kegelstumpfförmige Ausgestaltung des Planetenbolzens sowie die stufenförmige Verjüngung an dem aufgeweiteten Endes des Planetenbolzens, das heißt der Seite des Planetenbolzens mit dem zunehmenden Durchmesser, ermöglicht eine einfache Montage des kegelstumpfförmigen Planetenbolzens an einem Planetenträger mit zwei Wangen. Ferner kann durch einen derartigen Planetenbolzen eine gleich große Vorspannung beziehungsweise Vorspannungskraft zwischen dem Planetenbolzen und den unterschiedlich großen Kegelbohrungen der zwei Wangen des Planetenträgers erzeugt werden. Hierdurch ist gewährleistet, dass beim Betrieb eines Planetengetriebes gleich große Kräfte auf beiden Wangen des Planetenträgers ausgeübt werden.

In einer besonders vorteilhaften Ausgestaltung des Planetenbolzens kann bei diesem vorgesehen sein, dass zwei Versorgungsbohrungen zur Hindurchführung von Öl in dem Planetenbolzen vorgesehen sind, wobei eine erste Versorgungsbohrung von der Stirnseite des aufgeweiteten Endes des Planetenbolzens zu der Mantelfläche am verjüngten Ende des Planetenbolzens und ein zweite Versorgungsbohrung von der Stirnseite des aufgeweiteten Endes des Planetenbolzens zu der Mantelfläche der stufenförmigen Verjüngung am aufgeweiteten Ende des Planetenbolzens geführt ist. Die erste Versorgungsbohrung weist eine Einführöffnung an der Stirnseite des aufgeweiteten Endes des Planetenbolzens und eine Ausführöffnung an der Mantelfläche am verjüngten Ende des Planetenbolzens auf. Hierdurch kann beim Einführen des Planetenbolzens in die Kegelbohrung der ersten Wange des Planetenträgers Öl zwischen die Mantelfläche des Planetenbolzens und der Kegelbohrung in der ersten Wange des Planetenträgers unter hohem Druck eingeführt werden. Durch die Ölzufuhr in die Fügefläche beziehungsweise Passfläche zwischen dem verjüngten Ende des Planetenbolzens und der Kegelbohrung der ersten Wange des Planetenträgers gleitet der Planetenbolzen relativ leicht in die Kegelbohrung hinein. Das heißt, während der Montage des Planetenbolzens in die Kegelbohrung wird Öl über die erste Versorgungsbohrung unter hohem Druck in die Fügefläche eingepresst. Dadurch entsteht ein Gleitfilm zwischen der Mantelfläche des verjüngten Endes des Planetenbolzens und der Innenwandung der Kegelbohrung in der ersten Wange des Planetenträgers, der die benötigte axiale Montagekraft stark verringert und den Reibbeiwert der Passfläche reduziert. Hat der Planetenbolzen die gewünschte Position in der Kegelbohrung erreicht, wird die Ölzufuhr abgeschaltet, so dass der Ölfilm entweicht und der Planetenbolzen fest in der Kegelbohrung sitzt. Zusätzlich zu der Ausführöffnung können beispielsweise Ringnuten oder spiralförmige Vertiefungen in die Fügefläche beziehungsweise Passfläche eingebracht sein, die eine bessere Verteilung des Öls in der Fügefläche ermöglichen und auch das Entweichen des Öls nach Beendigung des axialen Aufschiebens des Planetenbolzens beschleunigen.

Durch das Anlegen eines Ölpressverbandes zwischen der Mantelfläche des verjüngten Endes des Planetenbolzens und der Kegelbohrung der ersten Wange des Planetenträgers ist die Montage des Planetenbolzens an der ersten Wange relativ einfach durchführbar.

Der Planetenbolzen weist eine zweite Versorgungsbohrung auf, die von der Stirnseite des aufgeweiteten Endes des Planetenbolzens zu der Mantelfläche der stufenförmigen Verjüngung am aufgeweiteten Ende des Planetenbolzens geführt ist. Nach dem Einpassen des verjüngten Endes des Planetenbolzens in die Kegelbohrung der ersten Wange des Planetenträgers, kann ein umlaufendes Verbindungselement, wie beispielsweise eine Kegelbüchse oder ein Spanndorn, auf die stufenförmige Verjüngung am aufgeweiteten Ende des Planetenbolzens beziehungsweise zwischen die stufenförmige Verjüngung und die Kegelbohrung der zweiten Wange des Planetenträgers axial eingepresst werden. Damit auch das axiale Einpressen des umlaufenden Verbindungselementes erleichtert wird, kann über die zweite Versorgungsbohrung des Planetenbolzens Öl unter hohem Druck in die Fügeflächen beziehungsweise Passflächen zwischen der Mantelfläche der stufenförmigen Verjüngung des Planetenbolzens und dem umlaufenden Verbindungselement beziehungsweise dem umlaufenden Verbindungselement und der Innenwandung der Kegelbohrung der zweiten Wange des Planetenträgers eingepresst werden. Dadurch entsteht in den Fügeflächen ebenfalls ein Gleitfilm, der die zum Einpressen des Verbindungselementes benötigte axiale Montagekraft stark verringert und den Reibbeiwert der Fügeflächen reduziert. Vorteilhafterweise weist das umlaufende Verbindungselement Leitungen beziehungsweise Kanäle zur Durchführungen des Öls zu den Fügeflächen an der Innenmantelfläche und die Außenmantelfläche des umlaufenden Verbindungselementes auf. Sobald das umlaufende Verbindungselement die gewünschte Position in dem Spalt zwischen der stufenförmigen Verjüngung und der Kegelbohrung der zweiten Wange des Planetenträgers erreicht hat, kann die Ölzufuhr abgeschaltet werden, so dass der Ölfilm entweichen kann und das umlaufende Verbindungselement und damit der Planetenbolzen fest in der Kegelbohrung der zweiten Wange des Planetenträgers einsitzt. Vorteilhafterweise wird das umlaufende Verbindungselement, insbesondere die Kegelbüchse, derart axial zwischen die Kegelbohrung der zweiten Wange des Planetenträgers und der stufenförmigen Verjüngung des Planetenbolzens eingebracht, dass die Vorspannungskraft zwischen dem umlaufenden Verbindungselement und der Kegelbohrung der zweiten Wange der Vorspannungskraft zwischen dem verjüngten Ende des Planetenbolzens und der Kegelbohrung der ersten Wange des Planetenträgers entspricht.

Ein weiterer Vorteil eines derartigen Planetenbolzens ist die relativ einfache Demontage des Planetenbolzens. Über die Versorgungsbohrungen kann erneut Öl unter hohem Druck zwischen die Fügeflächen beziehungsweise Passflächen eingepresst werden, so dass die Haftreibungen reduziert werden und die Kegelflächen des Planetenbolzens und der Kegelbohrungen wieder voneinander abgleiten können.

An der ersten Versorgungsbohrung und der zweiten Versorgungsbohrung sind vorteilhafterweise Pumpenanschlüsse zur Bereitstellung von Öl vorgesehen. Ferner können Mittel vorgesehen sein, die ein Verschließen der Versorgungsbohrungen, insbesondere im Bereich der Einfuhröffnungen der Versorgungsbohrungen, ermöglichen.

Die erste und die zweite Versorgungsbohrung führen von der Stirnseite des aufgeweiteten Endes des Planetenbolzens zu der Mantelfläche am verjüngten Ende des Planetenbolzens sowie der Mantelfläche der stufenförmigen Verjüngung am aufgeweiteten Ende des Planetenbolzens. Der Verlauf der Versorgungsbohrungen innerhalb des Planetenbolzens kann variabel ausgestaltet sein. Bevorzugt ist jedoch ein Planetenbolzen, bei dem die erste und die zweite Versorgungsbohrung durch axiale Bohrungen und Querbohrungen in dem Planetenbolzen gebildet sind. Die axialen Bohrungen verlaufen ausgehend von der Stirnseite des aufgeweiteten Endes des Planetenbolzens parallel zu der Längsachse des Planetenbolzens durch den Planetenbolzen. Die Querbohrungen sind vorteilhafterweise senkrecht zu den axialen Bohrungen angeordnet. Eine erste Querbohrung ist im Bereich des verjüngten Endes des Planetenbolzens vorgesehen. Diese erste Querbohrung ist derart in dem Planetenbolzen eingebracht, dass sie auf eine erste axiale Bohrung trifft. Eine zweite Querbohrung ist senkrecht zu der zweiten axialen Bohrung im Bereich der stufenförmigen Verjüngung des Planetenbolzens vorgesehen und trifft auf die zweite axiale Bohrung. Die axialen Bohrungen beziehungsweise Querbohrungen lassen sich einfach und kostengünstig in dem Planetenbolzen einbringen.

Bevorzugt ist daher der Planetenbolzen derart ausgebildet, dass das verjüngte Ende des kegelstumpfförmig ausgebildeten Planetenbolzens zur Ausbildung einer Pressverbindung, insbesondere einer Ölpressverbindung, mit der ersten Wange des Planetenträgers und die stufenförmige Verjüngung am aufgeweiteten Ende des kegelstumpfförmig ausgebildeten Planetenbolzens, im Zusammenspiel mit dem umlaufenden Verbindungselement, zur Ausbildung einer Pressverbindung, insbesondere einer Ölpressverbindung, mit der zweiten Wange des Planetenträgers ausgebildet ist. Ferner ist aufgrund der vorherigen Ausführung ein Planetenbolzen bevorzugt, bei dem an der stufenförmigen Verjüngung des aufgeweiteten Endes des Planetenbolzens ein umlaufendes Verbindungselement vorgesehen ist. Das umlaufende Verbindungselement ist vorteilhafterweise eine Kegelbüchse oder ein Spanndom. Das umlaufende Verbindungselement ermöglicht, dass der Planetenbolzen fest in der Kegelbohrung der zweiten Wange des Planetenträgers einsitzt. Insbesondere ermöglicht das umlaufende Verbindungselement, dass zwischen der Kegelbohrung der zweiten Wange des Planetenträgers und dem umlaufenden Verbindungselement und damit der stufenförmigen Verjüngung am aufgeweiteten Ende des Planetenbolzens eine gleich große Vorspannung beziehungsweise Vorspannungskraft vorherrscht, wie zwischen der Kegelbohrung der ersten Wange des Planetenträgers und der Mantelfläche des verjüngten Endes des Planetenbolzens.

Das umlaufende Verbindungselement weist vorteilhafterweise Leitungen und/oder Kanäle zur Durchführung von Öl von der Innenmantelfläche zu der Außenmantelfläche des Verbindungselementes auf. Beispielsweise können auch umlaufende Ringnute, insbesondere spiralförmige Ringnute, an dem umlaufenden Verbindungselement zur Weiterleitung des Öls vorgesehen sein. Dabei sind die Leitungen und/oder Kanäle derart in beziehungsweise an dem umlaufenden Verbindungselement angeordnet, dass während des axialen Einpressens des Verbindungselementes Öl von der Ausführöffnung in der Mantelfläche der stufenförmigen Verjüngung des Planetenbolzens in das umlaufende Verbindungselement eingepresst werden kann.

Gemäß dem zweiten Aspekt der Erfindung werden die Aufgaben durch einen Planetenträger eines Planetengetriebes, der zur drehfesten Aufnahme wenigstens eines Planetenbolzens, an dem über ein Lager ein Planetenrad drehbar angeordnet ist, ausgebildet, wobei der Planetenträger eine erste und eine zweite Wange aufweist, gelöst. Der Planetenträger ist dadurch gekennzeichnet, dass die erste Wange des Planetenträgers eine erste Kegelbohrung und die zweite Wange des Planetenträgers eine zweite Kegelbohrung aufweist, wobei die zweite Kegelbohrung in der zweiten Wange einen größeren Durchmesser als die erste Kegelbohrung der ersten Wange aufweist. Dadurch kann ein kegelstumpfförmiger Planetenbolzen über die zweite Kegelbohrung der zweiten Wange in die Kegelbohrung der ersten Wange eingeführt werden. Zusätzlich kann während des Einführens des Planetenbolzens dieser durch ein Planetenradlager eines Planetenrades, das zwischen den beiden Wangen des Planetenträgers sitzt, eingeführt werden. Der Planetenbolzen und die Kegelbohrungen sind im Bereich von wenigen Grad kegelig beziehungsweise konisch gearbeitet. Dies ist insbesondere beim Anlegen eines Ölpressverbandes erforderlich.

Bevorzugt ist daher einen Planetenträger, bei dem die erste und zweite Kegelbohrung der ersten und zweiten Wange des Planetenträgers zur Aufnahme eines Planetenbolzens, der gemäß dem ersten Aspekt der Erfindung ausgebildet ist, ausgebildet sind. Der Planetenträger kann vorteilhafterweise zweiteilig ausgebildet sein. Das heißt, ein erster Teil des Planetenträgers kann durch die erste Wange des Planetenträgers und ein zweiter Teil des Planetenträgers kann durch die zweite Wange des Planetenträgers gebildet werden. Zwischen dem ersten und dem zweiten Teil des Planetenträgers, das heißt zwischen der ersten Wange und der zweiten Wange des Planetenträgers, können Verbindungsstege vorgesehen sein, die außerhalb des Bereichs der Planetenräder angeordnet sind. Beispielsweise können der erste Teil und der zweite Teil des Planetenträgers durch Befestigungsmittel, insbesondere durch Befestigungsschrauben, die durch die Verbindungsstege hindurchgeführt werden, kraftschlüssig miteinander befestigt werden.

Ein derartig ausgebildeter Planetenträger hat den Vorteil, dass ein Planetenbolzen leicht in die Wangen des Planetenträgers eingepresst werden kann. Ferner ermöglicht ein derartig ausgebildeter Planetenträger auch eine einfache und kostengünstige Demontage eines Planetenbolzens von dem Planetenträger. Insbesondere Ölpressverbände ermöglichen eine einfache Montage und Demontage eines kegelstumpfförmigen Planetenbolzens in beziehungsweise von den konisch ausgebildeten Kegelbohrungen in den beiden Wangen des Planetenträgers. Zur Montage beziehungsweise Demontage des Planetenbolzens an beziehungsweise von dem Planetenträger sind relativ einfache Montagemittel erforderlich, die entsprechend wenig Montageplatz erfordern. Insbesondere aufgrund der Ölpressverbände kann beispielsweise ein relativ kleiner und einfacher Hydraulikzylinder zum Einpressen beziehungsweise Herausziehen des Planetenbolzens in beziehungsweise aus den Kegelbohrungen der Wangen des Planetenträgers verwendet werden.

Gemäß dem dritten Aspekt der Erfindung werden die Aufgaben durch ein Planetengetriebe mit einem Sonnenrad, einem Hohlrad und wenigstens einem zwischen dem Sonnenrad und dem Hohlrad drehbar angeordneten Planetenrad, wobei das wenigstens eine Planetenrad über ein Lager an einem Planetenbolzen drehbar gelagert ist, der an einem Planetenträger des Planetengetriebes drehfest befestigt ist, gelöst, wobei der Planetenbolzen gemäß dem ersten Aspekt der Erfindung und der Planetenträger gemäß dem zweiten Aspekt der Erfindung ausgebildet sind. Ein Planetengetriebe mit einem derartig ausgebildeten kegelstumpfförmigen Planetenbolzen sowie einem Planetenträger mit zwei Wangen, wobei in beiden Wangen Kegelbohrungen vorgesehen sind, ermöglicht ein einfaches, platzsparendes und kostengünstiges Montieren zumindest eines Planetenbolzens und damit zumindest eines Planetenrades an den Planetenträger des Planetengetriebes. Ferner kann insbesondere ein defekter Planetenbolzen beziehungsweise ein defektes Planetenrad sehr einfach und kostengünstig von dem Planetenträger demontiert beziehungsweise ausgetauscht werden.

Gemäß dem vierten und letzten Aspekt der Erfindung werden die Aufgaben durch ein Verfahren zur drehfesten Befestigung eines Planetenbolzens eines Planetenrades eines Planetengetriebes an einen Planetenträger, der eine erste und eine zweite Wange aufweist, wobei die erste Wange eine erste Kegelbohrung und die zweite Wange eine zweite Kegelbohrung aufweist, wobei die zweite Kegelbohrung in der zweiten Wange einen größeren Durchmesser als die erste Kegelbohrung der ersten Wange aufweist und wobei der Planetenbolzen gemäß dem ersten Aspekt der Erfindung ausgebildet ist, gelöst. Erfindungsgemäß zeichnet sich das Verfahren durch folgende Verfahrensschritte aus: a) Das verjüngend ausgebildete Ende des Planetenbolzens wird durch die zweite Kegelbohrung der zweiten Wange hindurchgeführt und in die erste Kegelbohrung der ersten Wange unter einer Kraftaufbringung zur Ausbildung einer Pressverbindung axial eingeführt, b) Auf die stufenförmige Verjüngung an dem aufgeweiteten Ende des Planetenbolzens, die in der zweiten Kegelbohrung der zweiten Wange einliegt, wird ein umlaufendes Verbindungselement unter einer Kraftaufbringung zur Ausbildung einer Pressverbindung mit dem Planetenbolzen und dem Planetenträger axial eingeführt.

Das heißt, der Planetenbolzen wird mit dem verjüngend ausgebildeten Ende voraus in die Kegelbohrungen der beiden Wangen des Planetenträgers axial eingeführt, insbesondere eingepresst. Dadurch, dass der Planetenbolzen an seinem aufgeweiteten Ende eine stufenförmige Verjüngung aufweist, legt sich zuerst das verjüngende Ende des Planetenbolzens an die kleinere Kegelbohrung in der ersten Wange des Planetenträgers an. Damit der Planetenbolzen mit einer bestimmten Vorspannungskraft in der ersten Kegelbohrung der ersten Wange des Planetenträgers einsitzt, wird der Planetenbolzen vorteilhafterweise über einen Hydraulikzylinder unter Aufbringung einer axialen Kraft axial in die erste Kegelbohrung der ersten Wange des Planetenträgers eingepresst. Nach der Erzeugung des Kegelpressverbandes zwischen dem verjüngenden Ende des Planetenbolzens und der ersten Kegelbohrung der ersten Wange des Planetenträgers wird auf die stufenförmige Verjüngung an dem aufgeweiteten Ende des Planetenbolzens, die in der zweiten Kegelbohrung der zweiten Wange des Planetenträgers einliegt, ein umlaufendes Verbindungselement axial eingeführt. Dabei wird das umlaufende Verbindungselement ebenfalls unter Aufbringung einer axialen Kraft, insbesondere durch einen Hydraulikzylinder, zu Erzeugung einer Pressverbindung mit dem Planetenbolzen und dem Planetenträger axial in die zweite Kegelbohrung der zweiten Wange des Planetenträgers eingepresst. Vorteilhafterweise wird das umlaufende Verbindungselement derart weit axial in den Spalt zwischen der stufenförmigen Verjüngung an dem aufgeweiteten Ende des Planetenbolzens und der Innenwandung der zweiten Kegelbohrung der zweiten Wange des Planetenträgers eingepresst, dass das Verbindungselement und damit der Planetenbolzen mit einer gleich großen Vorspannungskraft in der zweiten Wange des Planetenträgers einsitzt, wie der Planetenbolzen in der ersten Wange des Planetenträgers.

Bevorzugt wird als umlaufendes Verbindungselement eine Kegelbüchse oder ein Spanndom in den Spalt zwischen der stufenförmigen Verjüngung an dem aufgeweiteten Ende des Planetenbolzens und der Innenwandung der zweiten Kegelbohrung der zweiten Wange des Planetenträgers eingepresst. Das umlaufende Verbindungselement ist vorteilhafterweise an seiner der Innenwandung der zweiten Kegelbohrung der zweiten Wange des Planetenträgers zugewandten Mantelfläche konisch ausgebildet.

Gemäß einer bevorzugten Weiterentwicklung der Erfindung kann bei dem Verfahren vorgesehen sein, dass während des Einführens beziehungsweise Einpressens des Planetenbolzens in die erste Kegelbohrung der ersten Wange des Planetenträgers unter Druck Öl durch die erste Versorgungsbohrung des Planetenbolzens zwischen die Mantelfläche des Planetenbolzens und die Innenwandung der ersten Kegelbohrung eingebracht wird und dass während des Einführens des umlaufenden Verbindungselementes in die zweite Kegelbohrung der zweiten Wange des Planetenträgers unter Druck Öl durch die zweite Versorgungsbohrung des Planetenbolzens zwischen die Außenmantelfläche des umlaufenden Verbindungselementes und die Innenwandung der zweiten Kegelbohrung sowie zwischen die Innenmantelfläche des umlaufenden Verbindungselementes und die Mantelfläche der stufenförmigen Verjüngung an dem aufgeweiteten Ende des Planetenbolzens eingebracht wird und dass nach dem Einbringen des Planetenbolzens in die Kegelbohrungen des Planetenträgers die Druckölversorgung entspannt wird und die Versorgungsbohrungen verschlossen werden.

Das heißt, vorzugsweise wird über eine Einführöffnung an der Stirnseite des aufgeweiteten Endes des Planetenbolzens Öl unter hohem Druck in die erste Versorgungsbohrung des Planetenbolzens eingepresst, so dass dieses durch eine Ausführöffnung an der Mantelfläche am verjüngten Ende des Planetenbolzens in die Fügefläche zwischen dem verjüngten Ende des Planetenbolzens und der Innenwandung der ersten Kegelbohrung der ersten Wange des Planetenträgers eingeführt werden kann. Durch das eingepresste Öl gleitet der kegelstumpfförmige Planetenbolzen leichter axial in die erste Kegelbohrung der ersten Wange des Planetenträgers ein. Der entstehende Gleitfilm ermöglicht, dass die benötigte axiale Montagekraft verringert und der Reibbeiwert in der Fügefläche reduziert wird. Sobald der Planetenbolzen die gewünschte Position in der ersten Kegelbohrung der ersten Wange des Planetenträgers erreicht hat, wird die Ölzufuhr abgeschaltet, so dass das Öl entweichen kann und der Planetenbolzen unter Bildung einer Pressverbindung fest in der ersten Kegelbohrung einsitzt.

Nach der Befestigung des Planetenbolzens in der ersten Kegelbohrung der ersten Wange des Planetenträgers, wird während des axialen Einführens des umlaufenden Verbindungselementes, insbesondere einer Kegelbüchse oder eines Spanndorns, in den Spalt zwischen der stufenförmigen Verjüngung des Planetenbolzens und der zweiten Kegelbohrung in der zweiten Wange des Planetenträgers unter Hochdruck Öl in die Fügeflächen zwischen dem umlaufenden Verbindungselement und der zweiten Kegelbohrung der zweiten Wange des Planetenträgers sowie der Mantelfläche der stufenförmigen Verjüngung am aufgeweiteten Ende des Planetenbolzens eingepresst. Der Ölfilm an den Fügeflächen ermöglicht, dass das Verbindungselement leichter montiert werden kann. Das eingepresste Öl wird vorteilhafterweise durch Leitungen und/oder Kanäle in dem Verbindungselement weitergeleitet und den Fügeflächen an der Innenmantelfläche und der Außenmantelfläche des umlaufenden Verbindungselementes zugeführt. Nach dem Erreichen der gewünschten Position des umlaufenden Verbindungselementes in der zweiten Kegelbohrung der zweiten Wange des Planetenträgers wird die Ölzufuhr abgeschaltet, so dass der Ölfilm entweichen kann und das umlaufende Verbindungselement und damit der Planetenbolzen fest in der Kegelbohrung der zweiten Wange des Planetenträgers einsitzen. Vorteilhafterweise wird das umlaufende Verbindungselement, insbesondere die Kegelbüchse, derart axial zwischen die Kegelbohrung der zweiten Wange des Planetenträgers und der stufenförmigen Verjüngung des Planetenbolzens eingebracht, dass die Vorspannungskraft zwischen dem umlaufenden Verbindungselement und der Kegelbohrung der zweiten Wange der Vorspannungskraft zwischen dem verjüngten Ende des Planetenbolzens und der Kegelbohrung der ersten Wange des Planetenträgers entspricht.

Das Öl wird vorteilhafterweise über Pumpenanschlüsse an den Einfuhröffnungen der ersten und der zweiten Versorgungsbohrung in die Versorgungsbohrungen eingepresst. Nach dem Entspannen der Ölzufuhr und dem Entweichen des Öls aus den Fügeflächen werden die Versorgungsbohrungen, insbesondere die Einfuhröffnungen der Versorgungsbohrungen, vorzugsweise durch Verschlussmittel, beispielsweise Pfropfen oder Deckel, verschlossen.

Das Verfahren ermöglicht eine einfache axiale Montage und Demontage von kegelstumpfförmig ausgebildeten Planetenbolzen an einen Planetenträger, der zwei Wangen aufweist, in denen jeweils Kegelbohrungen zur Aufnahme des Planetenbolzens vorgesehen sind. Durch das axial eingepresste umlaufende Verbindungselement kann der Planetenbolzen sicher an dem Planetenträger befestigt werden.

Gemäß einer weiteren bevorzugten Weiterentwicklung der Erfindung kann bei dem Verfahren vorgesehen sein, dass nach einer erneuten Druckölbeaufschlagung der Versorgungsbohrungen des Planetenbolzens das umlaufende Verbindungselement aus der zweiten Kegelbohrung des Planetenträgers und anschließend der Planetenbolzen aus den Kegelbohrungen des Planetenträgers herausgezogen werden kann. Das heißt, durch eine erneute Druckölbeaufschlagung können die Pressverbände leicht gelöst werden und der Planetenbolzen relativ einfach von dem Planetenträger demontiert werden.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigt schematisch:

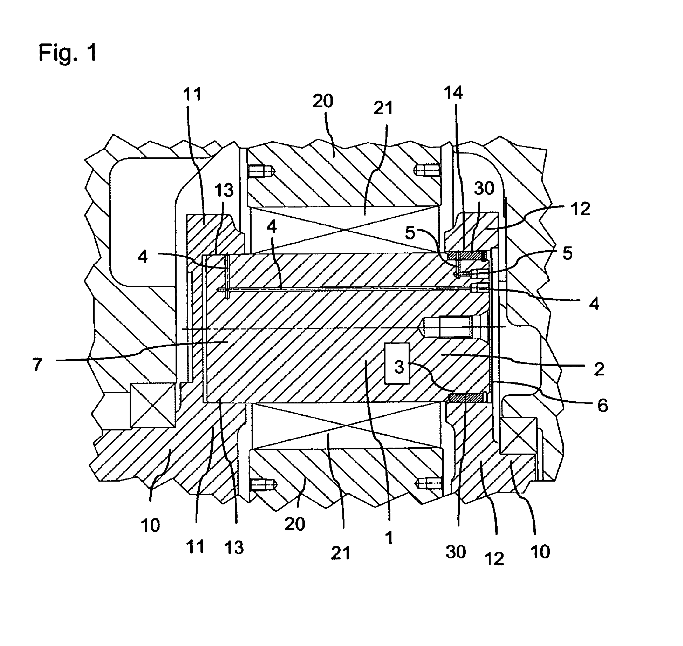

- Figur 1:: in einer Schnittdarstellung ein Planetengetriebe mit einem Planetenbolzen und einem Planetenträger, die nach dem erfindungsgemäßen Konstruktionsprinzip ausgebildet sind.

Fig. 1 zeigt in einer schematischen Schnittdarstellung ein Planetengetriebe mit einem Planetenbolzen 1 und einem Planetenträger 10, die nach dem erfindungsgemäßen Konstruktionsprinzip ausgebildet sind. Der Planetenbolzen 1 ist kegelstumpfförmig ausgebildet. An seinem aufgeweiteten Ende 2 weist der Planetenbolzen 1 eine stufenförmige Verjüngung 3 zur Aufnahme eines umlaufenden Verbindungselementes 30 auf. Der derartig ausgebildete Planetenbolzen 1 kann einfach, platzsparend und kostengünstig an dem Planetenträger 10, der zwei Wangen 11, 12 aufweist, die insbesondere parallel zueinander angeordnet sind, montiert und demontiert werden. Zur Befestigung des Planetenbolzens 1 ist vorteilhafterweise relativ wenig Platz für Montagehilfsmittel erforderlich.

Der Planetenbolzen 1 ist in beiden Wangen 11, 12 des Planetenträgers 10 beziehungsweise in den Kegelbohrungen 13, 14 der beiden Wangen 11, 12 des Planetenträgers 10 gleich fest eingepresst, das heißt, es liegt vorzugsweise eine gleich große Vorspannung zwischen den beiden Wangen 11, 12 und dem Planetenbolzen 1 vor.

Die stufenförmige Verjüngung 3 an dem aufgeweiteten Ende 2 des Planetenbolzens 1 ermöglicht, dass die Kegelbohrung 14 in der zweiten Wange 12 des Planetenträgers 10 im Vergleich zur Kegelbohrung 13 in der ersten Wange 11 des Planetenträgers 10 nicht passgenau gefertigt werden muss. Durch die stufenförmige Verjüngung 3 an dem breiteren Ende 2 des kegelstumpfförmigen Planetenbolzens 1 kann der Planetenbolzen 1 zunächst sicher in die erste Kegelbohrung 13 der ersten Wange 11 eingeführt beziehungsweise eingepasst werden. Das verjüngte Ende 7 des Planetenbolzens 2 ist mittels eines Kegelpressverbandes, insbesondere eines Ölpressverbandes, an der ersten Wange 11 des Planetenträgers 10 befestigt. Der Planetenbolzen 1 ist derart ausgebildet, dass die stufenförmige Verjüngung 3 des aufgeweiteten Endes 2 des Planetenbolzens 1 genau in der Kegelbohrung 14 der zweiten Wange 12 des Planetenträgers 1 einliegt. Durch die Verjüngung 3 am Ende 2 des breiter werdenden Teils des Planetenbolzens 1 ist der Planetenbolzen 1 beabstandet zu der Innenwandung der Kegelbohrung 14 der zweiten Wange 12 angeordnet. In dieses Spiel zwischen der stufenförmigen Verjüngung 3 des aufgeweiteten Endes 2 des Planetenbolzens 1 und der Innenwandung der Kegelbohrung 14 der zweiten Wange 1 ist das umlaufende Verbindungselement, 30, das vorzugsweise als Kegelbüchse oder als Spanndom ausgebildet ist, eingebracht. Dabei ist das umlaufende Verbindungselement 30 derart auf die stufenförmige Verjüngung 3 beziehungsweise zwischen die stufenförmige Verjüngung 3 und die Kegelbohrung 14 der zweiten Wange 12 des Planetenträgers 10 eingebracht, dass der entstehende Kegelpressverband, insbesondere der Ölpressverband, eine gleich große Vorspannung aufweist, wie bei dem Kegelpressverband zwischen dem verjüngten Ende 7 des Planetenbolzens 1 und der Kegelbohrung 13 der ersten Wange 11 des Planetenträgers 10.

Die kegelstumpfförmige Ausgestaltung des Planetenbolzens 1 sowie die stufenförmige Verjüngung 3 an dem aufgeweiteten Endes 2 des Planetenbolzens 1 ermöglichen eine einfache Montage des kegelstumpfförmigen Planetenbolzens 1 an dem Planetenträger 10. Beim Betrieb eines Planetengetriebes mit einem derartigen Planetenbolzen 1 und einem derartigen Planetenträger 10 werden gleiche Kräfte auf beide Wangen 11, 12 des Planetenträgers 10 ausgeübt.

Der Planetenbolzen 1 weist zwei Versorgungsbohrungen 4 , 5 zur Hindurchführung von Öl auf, wobei die erste Versorgungsbohrung 4 von der Stirnseite 6 des aufgeweiteten Endes 2 des Planetenbolzens 1 zu der Mantelfläche am verjüngten Ende 7 des Planetenbolzens 1 und die zweite Versorgungsbohrung 5 von der Stirnseite 6 des aufgeweiteten Endes 2 des Planetenbolzens 1 zu der Mantelfläche der stufenförmigen Verjüngung 3 am aufgeweiteten Ende 2 des Planetenbolzens 1 geführt ist. Die erste Versorgungsbohrung 4 weist eine Einführöffnung an der Stirnseite 6 des aufgeweiteten Endes 2 des Planetenbolzens 1 und eine Ausführöffnung an der Mantelfläche am verjüngten Ende 7 des Planetenbolzens 1 auf. Hierdurch kann beim Einführen des Planetenbolzens 1 in die Kegelbohrung 13 der ersten Wange 11 des Planetenträgers 10 Öl unter hohem Druck zwischen die Mantelfläche des Planetenbolzens 1 und der Kegelbohrung 13 der ersten Wange 11 des Planetenträgers 10 eingeführt werden. Durch die Ölzufuhr in die Fügefläche beziehungsweise Passfläche zwischen dem verjüngten Ende 7 des Planetenbolzens 1 und der Kegelbohrung 13 der ersten Wange 11 des Planetenträgers 1 gleitet der Planetenbolzen 1 bei der Montage leicht in die Kegelbohrung 13 hinein. Das heißt, während der Montage des Planetenbolzens 1 in die Kegelbohrung 13 wird Öl über die erste Versorgungsbohrung 4 unter hohem Druck in die Fügefläche eingepresst. Hat der Planetenbolzen 1 die gewünschte Position in der Kegelbohrung 13 erreicht, wird die Ölzufuhr abgeschaltet, so dass der Ölfilm entweicht und der Planetenbolzen 1 fest in der Kegelbohrung 13 sitzt.

Der Planetenbolzen 1 weist eine zweite Versorgungsbohrung 5 auf, die von der Stirnseite 6 des aufgeweiteten Endes 2 des Planetenbolzens 1 zu der Mantelfläche der stufenförmigen Verjüngung 3 am aufgeweiteten Ende 2 des Planetenbolzens 1 geführt ist. Nach dem Einpassen des verjüngten Endes 7 des Planetenbolzens 1 in die Kegelbohrung 13 der ersten Wange 11 des Planetenträgers 10, wird das umlaufende Verbindungselement 30 zwischen die stufenförmige Verjüngung 3 und die Kegelbohrung 14 der zweiten Wange 12 des Planetenträgers 10 axial eingepresst. Über die zweite Versorgungsbohrung 5 des Planetenbolzens 1 wird dabei Öl unter hohem Druck in die Fügeflächen beziehungsweise Passflächen zwischen der Mantelfläche der stufenförmigen Verjüngung 3 des Planetenbolzens 1 und dem umlaufenden Verbindungselement 30 beziehungsweise dem umlaufenden Verbindungselement 30 und der Innenwandung der Kegelbohrung 14 der zweiten Wange 12 des Planetenträgers 10 eingepresst. Dadurch entsteht in den Fügeflächen ebenfalls ein Gleitfilm, der die zum Einpressen des Verbindungselementes 30 benötigte axiale Montagekraft stark verringert und den Reibbeiwert der Fügeflächen reduziert. Vorteilhafterweise weist das umlaufende Verbindungselement Leitungen beziehungsweise Kanäle zur Durchführungen des Öls zu den Fügeflächen an der Innenmantelfläche und die Außenmantelfläche des umlaufenden Verbindungselementes auf. Sobald das umlaufende Verbindungselement 30 die gewünschte Position in dem Spalt zwischen der stufenförmigen Verjüngung 3 und der Kegelbohrung 14 der zweiten Wange 12 des Planetenträgers 10 erreicht hat, wird die Ölzufuhr abgeschaltet werden, so dass der Ölfilm entweichen kann und das umlaufende Verbindungselement 30 und damit der Planetenbolzen 1 fest in der Kegelbohrung 14 der zweiten Wange 12 des Planetenträgers 10 einsitzt.

Ein Vorteil eines derartigen Planetenbolzens 1 ist die relativ einfache Demontage des Planetenbolzens 1. Über die Versorgungsbohrungen 4, 5 kann erneut Öl unter hohem Druck zwischen die Fügeflächen beziehungsweise Passflächen eingepresst werden, so dass die Haftreibungen reduziert werden und die Kegelflächen des Planetenbolzens 1 und der Kegelbohrungen 13, 14 wieder voneinander abgleiten können.

An der ersten Versorgungsbohrung und der zweiten Versorgungsbohrung können Pumpenanschlüsse zur Bereitstellung von Öl vorgesehen sein. Ferner können Mittel vorgesehen sein, die ein Verschließen der Versorgungsbohrungen 4, 5, insbesondere im Bereich der Einfuhröffnungen der Versorgungsbohrungen 4, 5, ermöglichen.

### Bezugszeichenliste

- 1: Planetenbolzen
- 2: aufgeweitetes Ende des Planetenbolzens
- 3: stufenförmige Verjüngung des Planetenbolzens
- 4: erste Versorgungsbohrung
- 5: zweite Versorgungsbohrung
- 6: Stirnseite des aufgeweiteten Endes des Planetenbolzens
- 7: verjüngtes Ende des Planetenbolzens
- 10: Planetenträger
- 11: erste Wange des Planetenträgers
- 12: zweite Wange des Planetenträgers
- 13: Kegelbohrung in der ersten Wange des Planetenträgers
- 14: Kegelbohrung in der zweiten Wange des Planetenträgers
- 20: Planetenrad
- 21: Planetenlager
- 30: umlaufendes Verbindungselement

## Patentansprüche

1. Planetenbolzen (1) zur Anordnung eines Planetenrades (20) an einen Planetenträger (10) mit zwei Wangen (11, 12),
**dadurch gekennzeichnet,**
**dass** der Planetenbolzen (1) kegelstumpfförmig ausgebildet ist, wobei der Planetenbolzen (1) an seinem aufgeweiteten Ende (2) eine stufenförmige Verjüngung (3) zur Aufnahme eines umlaufenden Verbindungselementes (30) aufweist.

2. Planetenbolzen (1) nach Anspruch 1,
**dadurch gekennzeichnet,**
**dass** zwei Versorgungsbohrungen (4, 5) zur Hindurchführung von Öl in dem Planetenbolzen (1) vorgesehen sind, wobei eine erste Versorgungsbohrung (4) von der Stirnseite (6) des aufgeweiteten Endes (2) des Planetenbolzens (1) zu der Mantelfläche am verjüngten Ende (7) des Planetenbolzens (1) und ein zweite Versorgungsbohrung (5) von der Stirnseite (6) des aufgeweiteten Endes (2) des Planetenbolzens (1) zu der Mantelfläche der stufenförmigen Verjüngung (3) am aufgeweiteten Ende (2) des Planetenbolzens (1) geführt ist.

3. Planetenbolzen (1) nach wenigstens einem der vorhergehenden Ansprüche 1 oder 2,
**dadurch gekennzeichnet,**
**dass** die erste und die zweite Versorgungsbohrung (4, 5) durch axiale Bohrungen und Querbohrungen in dem Planetenbolzen (1) gebildet sind.

4. Planetenbolzen (1) nach wenigstens einem der vorhergehenden Ansprüche 1 bis 3,
**dadurch gekennzeichnet,**
**dass** das verjüngte Ende (7) des kegelstumpfförmig ausgebildeten Planetenbolzens (1) zur Ausbildung einer Pressverbindung mit der ersten Wange (11) des Planetenträgers (10) und die stufenförmige Verjüngung (3) am aufgeweiteten Ende (2) des kegelstumpfförmig ausgebildeten Planetenbolzens (1) im Zusammenspiel mit dem umlaufenden Verbindungselement (30) zur Ausbildung einer Pressverbindung mit der zweiten Wange (12) des Planetenträgers (10) ausgebildet ist.

5. Planetenbolzen (1) nach wenigstens einem der vorhergehenden Ansprüche 1 bis 4,
**dadurch gekennzeichnet,**
**dass** an der stufenförmigen Verjüngung (3) des aufgeweiteten Endes (2) des Planetenbolzens (1) ein umlaufendes Verbindungselement (30) vorgesehen ist.

6. Planetenbolzen (1) nach wenigstens einem der vorhergehenden Ansprüche 1 bis 5,
**dadurch gekennzeichnet,**
**dass** das umlaufende Verbindungselement (30) eine Kegelbüchse oder ein Spanndom ist.

7. Planetenbolzen (1) nach wenigstens einem der vorhergehenden Ansprüche 1 bis 6,
**dadurch gekennzeichnet,**
**dass** das umlaufende Verbindungselement (30) Leitungen und/oder Kanäle zur Durchführungen von Öl von der Innenmantelfläche zu der Außenmantelfläche des Verbindungselementes (30) aufweist.

8. Planetenträger (10) eines Planetengetriebes, der zur drehfesten Aufnahme wenigstens eines Planetenbolzens (1), an dem über ein Lager (21) ein Planetenrad (20) drehbar angeordnet ist, ausgebildet ist, wobei der Planetenträger (10) eine erste und eine zweite Wange (11, 12) aufweist,
**dadurch gekennzeichnet,**
**dass** die erste Wange (11) eine erste Kegelbohrung (13) und die zweite Wange (12) eine zweite Kegelbohrung (14) aufweist, wobei die zweite Kegelbohrung (14) in der zweiten Wange (12) einen größeren Durchmesser als die erste Kegelbohrung (13) der ersten Wange (11) aufweist.

9. Planetenträger (1) nach Anspruch 8,
**dadurch gekennzeichnet,**
**dass** die erste und zweite Kegelbohrung (13, 14) der ersten und zweiten Wange (11, 12) des Planetenträgers (10) zur Aufnahme eines Planetenbolzens (1) gemäß einem der Ansprüche 1 bis 7 ausgebildet sind.

10. Planetengetriebe mit einem Sonnenrad, einem Hohlrad und wenigstens einem zwischen dem Sonnenrad und dem Hohlrad drehbar angeordneten Planetenrad (20), wobei das wenigstens eine Planetenrad (20) über ein Lager (21) an einem Planetenbolzen (1) drehbar gelagert ist, der an einem Planetenträger (10) des Planetengetriebes drehfest befestigt ist,
**dadurch gekennzeichnet,**
**dass** der Planetenbolzen (1) gemäß einem der vorhergehenden Ansprüche 1 bis 7 und der Planetenträger (10) gemäß einem der vorhergehenden Ansprüche 8 oder 9 ausgebildet sind.

11. Verfahren zur drehfesten Befestigung eines Planetenbolzens (1) eines Planetenrades (20) eines Planetengetriebes an einen Planetenträger (10), der eine erste und eine zweite Wange (11, 12) aufweist, wobei die erste Wange (11) eine erste Kegelbohrung (13) und die zweite Wange (12) eine zweite Kegelbohrung (14) aufweist, wobei die zweite Kegelbohrung (14) in der zweiten Wange (12) einen größeren Durchmesser als die erste Kegelbohrung (13) der ersten Wange (11) aufweist, wobei der Planetenbolzen (1) gemäß einem der vorhergehenden Ansprüche 1 bis 7 ausgebildet ist,
bei dem das Verfahren durch folgende Verfahrensschritte **gekennzeichnet** ist
a) das verjüngend ausgebildete Ende (7) des Planetenbolzens (1) wird durch die zweite Kegelbohrung (14) der zweiten Wange (12) hindurchgeführt und in die erste Kegelbohrung (13) der ersten Wange (11) unter einer Kraftaufbringung zur Ausbildung einer Pressverbindung axial eingeführt,
b) auf die stufenförmige Verjüngung (3) an dem aufgeweiteten Ende (2) des Planetenbolzens (1), die in der zweiten Kegelbohrung (14) der zweiten Wange (12) einliegt, wird ein umlaufendes Verbindungselement (30) unter einer Kraftaufbringung zur Ausbildung einer Pressverbindung mit dem Planetenbolzen (1) und dem Planetenträger (10) axial eingeführt.

12. Verfahren nach Anspruch 11,
**dadurch gekennzeichnet,**
**dass** während des Einführens des Planetenbolzens (1) in die erste Kegelbohrung (13) der ersten Wange (11) des Planetenträgers (1) unter Druck Öl durch die erste Versorgungsbohrung (4) des Planetenbolzens (1) zwischen die Mantelfläche des Planetenbolzens (1) und die Innenwandung der ersten Kegelbohrung (13) eingebracht wird und dass während des Einführens des umlaufenden Verbindungselementes (30) in die zweite Kegelbohrung (14) der zweiten Wange (12) des Planetenträgers (1) unter Druck Öl durch die zweite Versorgungsbohrung (5) des Planetenbolzens (1) zwischen die Außenmantelfläche des umlaufenden Verbindungselementes (30) und die Innenwandung der zweiten Kegelbohrung (14) sowie zwischen die Innenmantelfläche des umlaufenden Verbindungselementes (30) und die Mantelfläche der stufenförmigen Verjüngung (3) an dem aufgeweiteten Ende (2) des Planetenbolzens (1) eingebracht wird und dass nach dem Einbringen des Planetenbolzens (1) in die Kegelbohrungen (13, 14) des Planetenträgers (10) die Druckölversorgung entspannt wird.

13. Verfahren nach Anspruch 12,
**dadurch gekennzeichnet,**
**dass** nach einer erneuten Druckölbeaufschlagung der Versorgungsbohrungen (4, 5) des Planetenbolzens (1) das umlaufende Verbindungselement (30) aus der zweiten Kegelbohrung (14) des Planetenträgers (10) und anschließend der Planetenbolzen (1) aus den Kegelbohrungen (13, 14) des Planetenträgers (10) herausgezogen werden.

## Claims

1. Planetary pin (1) for the adjustment of a planetary wheel (20) at a planetary carrier (10) with two flanges (11, 12),
**characterized in that,**
the planetary pin (1) has a truncated cone like shape, wherein the planetary pin (1) comprises a cascaded diminution (3) for the acceptance of a circumferential connecting element (30) at its widened edge (2).

2. Planetary pin (1) according to claim 1,
**characterized in that,**
two supply boreholes (4, 5) are provided for the passage of oil into the planetary pin
wherein a first supply borehole (4) is directed from the front edge (6) of the widened edge (2) of the planetary pin (1) towards the skin surface at the diminished edge (7) of the planetary pin (1) and a second supply borehole (5) is directed from the front edge (6) of the widened edge (2) of the planetary pin (1) towards the skin surface of the cascaded diminution (3) at the widened edge (2) of the planetary pin (1).

3. Planetary pin (1) according to at least one of the preceding claims 1 or 2, **characterized in that,**
the first and second borehole (4, 5) are built through axial boreholes and cross holes in the planetary pin (1).

4. Planetary pin (1) according to at least one of the preceding claims 1 to 3, **characterized in that,**
the diminished edge (7) of the cone like shaped planetary pin (1) is formed for developing a crimp connection with the first flange (11) of the planetary carrier (10) and the cascaded diminution (3) at the widened edge (2) of the cone like shaped planetary pin (1) in interaction with the circumferential connecting element (30) for the shaping of a crimp connection with the second flange (12) of the planet carrier (10).

5. Planetary pin (1) according to at least one of the preceding claims 1 to 4, **characterized in that,**
at the cascaded diminution (3) of the widened edge (2) of the planetary pin (1) an circumferential connecting element (30) is provided.

6. Planetary pin (1) according to at least one of the preceding claims 1 to 5, **characterized in that,**
the circumferential connecting element (30) is a ball lining or a clamping mandrel.

7. Planetary pin (1) according to at least one of the preceding claims 1 to 6, **characterized in that,**
the circumferential connecting element (30) comprises conductions and/or channels for the passaging of oil from the inner skin surface to the outer skin surface of the connecting element (30).

8. Planetary carrier (10) of a planetary gear, formed for the torque proof acceptance of at least one planetary pin (1), at which a planetary wheel (20) is pivotably arranged via a mounting (21), wherein the planetary carrier (10) comprises a first and a second flange (11, 12),
**characterized in that,**
the first flange (11) comprises a first cone like borehole (13) and the second flange (12) comprises a second cone like borehole (14), wherein the second cone like borehole (14) in the second flange (12) comprises a greater diameter than the first cone like borehole (13) of the first flange (11).

9. Planetary carrier (10) according to claim 8,
**characterized in that,**
the first and the second cone like borehole (13, 14) of the first and second flange (11, 12) of the planetary carrier (10) are formed for the acceptance of the planetary pin (1) according to claims 1 to 7.

10. Planetary gear with a sun wheel, a hollow wheel and at least one between the sun wheel and the hollow wheel pivotably mounted planetary wheel (20), wherein the at least one planetary wheel (20) is pivotably arranged at a planetary pin (1) via a mounting (21), which is torque proofly arranged at a planetary carrier (10) of the planetary gear,
**characterized in that,**
the planetary pin (1) is formed according to one of the preceding claims 1 to 7 and the planetary carrier (10) is formed according to one of the preceding claims 8 or 9.

11. A method for the torque proof mounting of a planetary pin (1) of a planetary wheel (20) of a planetary gear at a planetary carrier (10), which comprises a first and a second flange (11, 12), wherein the first flange (11) comprises a first cone like borehole (13) and the second flange (12) comprises a second cone like borehole (14), wherein the second cone like borehole (14) in the second flange (12) comprises a greater diameter than the first cone like borehole (13) in the first flange (11), wherein the planetary pin (1) is formed according to one of the preceding claims 1 to 7, by which the method is **characterized by** the following method steps:
a) The diminished shaped edge (7) of the planetary pin (1) is passed through the second cone like borehole (14) of the second flange (12) and is axially inserted in the first cone like borehole (13) of the first flange (11) by the application of pressure for shaping a crimp connection.
b) At the cascaded diminution (3) at the widened edge (2) of the planetary pin which is enclosed in the second cone like borehole (14) of the second flange (12), a circumferential connecting element (30) is axially inserted under the application of pressure for shaping a crimp connection with the planetary pin (1) and the planetary carrier (10).

12. Method according to claim (11),
**characterized in that,**
during the insertion of the planetary pin (1) into the first cone like borehole (13) of the first flange (11) of the planetary pin (1) oil is inserted under pressure through the first supply borehole (4) of the planetary pin (1) between the skin surface of the planetary pin (1) and the inner wall of the first cone like borehole (13) and that during the insertion of the circumferential connecting element (30) into the second cone like borehole (14) of the second flange (12) of the planetary pin (1) oil is inserted under pressure through the second supply borehole (5) of the planetary pin (1) between the outer skin surface of the circumferential connecting element (30) and the inner wall of the second cone like bore hole (14) as well as between the inner skin surface of the circumferential connecting element (30) and the skin surface of the cascaded diminution (3) at the widened edge (2) of the planetary pin (1) and that the pressure oil supply is released after the insertion of the planetary pin (1) into the cone like boreholes (13, 14) of the planetary carrier (10).

13. Method according to claim 12,
**characterized in that,**
after a reapplication of pressure oil of the supply boreholes (4, 5) of the planetary pin (1) the circumferential connecting element (30) is withdrawn out of the second cone like borehole (14) of the planetary carrier (10) and subsequently the planetary pin (1) is withdrawn from the cone like boreholes (13, 14) of the planetary carrier (10).

## Revendications

1. Boulon de satellite (1) dévolu à l'installation d'un pignon satellite (20) sur un porte-satellites (10) muni de deux joues (11, 12),
**caractérisé par le fait**
**que** le boulon de satellite (1) est de réalisation tronconique, ledit boulon de satellite (1) étant pourvu, à son extrémité évasée (2), d'un rétrécissement (3) configuré en gradin et conçu pour recevoir un élément périphérique de liaison (30).

2. Boulon de satellite (1) selon la revendication 1,
**caractérisé par le fait**
**que** deux alésages d'alimentation (4, 5) sont prévus pour assurer une circulation d'huile dans ledit boulon de satellite (1), sachant qu'un premier alésage d'alimentation (4) part de la face extrême (6) de l'extrémité évasée (2) dudit boulon de satellite (1) et gagne la surface d'enveloppe située à l'extrémité rétrécie (7) dudit boulon de satellite (1), et qu'un second alésage d'alimentation (5) part de ladite face extrême (6) de l'extrémité évasée (2) dudit boulon de satellite (1) et gagne la surface d'enveloppe du rétrécissement (3) configuré en gradin et situé à ladite extrémité évasée (2) dudit boulon de satellite (1).

3. Boulon de satellite (1) selon au moins l'une des revendications 1 ou 2 précédentes,
**caractérisé par le fait**
**que** les premier et second alésages d'alimentation (4, 5) sont formés par des alésages axiaux et par des alésages transversaux ménagés dans ledit boulon de satellite (1).

4. Boulon de satellite (1) selon au moins l'une des revendications 1 à 3 précédentes,
**caractérisé par le fait**
**que** l'extrémité rétrécie (7) dudit boulon de satellite (1) de réalisation tronconique est réalisée en vue d'instaurer un ajustement serré avec la première joue (11) du porte-satellites (10) et le rétrécissement (3) configuré en gradin, situé à l'extrémité évasée (2) dudit boulon de satellite (1) de réalisation tronconique, est réalisé en vue d'instaurer un ajustement serré avec la seconde joue (12) dudit porte-satellites (10) en coopération avec l'élément périphérique de liaison (30).

5. Boulon de satellite (1) selon au moins l'une des revendications 1 à 4 précédentes,
**caractérisé par le fait**
**qu'**un élément périphérique de liaison (30) est prévu sur le rétrécissement (3) configuré en gradin à l'extrémité évasée (2) dudit boulon de satellite (1).

6. Boulon de satellite (1) selon au moins l'une des revendications 1 à 5 précédentes,
**caractérisé par le fait**
**que** l'élément périphérique de liaison (30) est une douille tronconique ou une broche de serrage.

7. Boulon de satellite (1) selon au moins l'une des revendications 1 à 6 précédentes,
**caractérisé par le fait**
**que** l'élément périphérique de liaison (30) présente des conduits et/ou des canaux affectés à la circulation d'huile depuis la surface d'enveloppe intérieure jusqu'à la surface d'enveloppe extérieure dudit élément de liaison (30).

8. Porte-satellites (10) d'un engrenage planétaire conçu pour recevoir, avec assujettissement rotatif, au moins un boulon de satellite (1) sur lequel un pignon satellite (20) est monté à rotation par l'intermédiaire d'un palier (21), ledit porte-satellites (10) comprenant des première et seconde joues (11, 12),
**caractérisé par le fait**
**que** la première joue (11) comporte un premier alésage tronconique (13) et la seconde joue (12) comporte un second alésage tronconique (14), ledit second alésage tronconique (14), pratiqué dans ladite seconde joue (12), présentant un plus grand diamètre que ledit premier alésage tronconique (13) de ladite première joue (11).

9. Porte-satellites (10) selon la revendication 8,
**caractérisé par le fait**
**que** les premier et second alésages tronconiques (13, 14) des première et seconde joues (11, 12) dudit porte-satellites (10) sont conçus pour recevoir un boulon de satellite (1) conforme à l'une des revendications 1 à 7.

10. Engrenage planétaire comprenant une roue planétaire, une roue creuse et au moins un pignon satellite (20) interposé entre ladite roue planétaire et ladite roue creuse, avec faculté de rotation, ledit pignon satellite (20) à présence minimale étant monté à rotation, par l'intermédiaire d'un palier (21), sur un boulon de satellite (1) assujetti en rotation à un porte-satellites (10) dudit engrenage planétaire,
**caractérisé par le fait**
**que** le boulon de satellite (1) est réalisé conformément à l'une des revendications 1 à 7 précédentes, et le porte-satellites (10) est réalisé conformément à l'une des revendications 8 ou 9 précédentes.

11. Procédé d'assujettissement rotatif d'un boulon de satellite (1) d'un pignon satellite (20) d'un engrenage planétaire à un porte-satellites (10) comprenant des première et seconde joues (11, 12), la première joue (11) comportant un premier alésage tronconique (13) et la seconde joue (12) comportant un second alésage tronconique (14), ledit second alésage tronconique (14), pratiqué dans ladite seconde joue (12), présentant un plus grand diamètre que ledit premier alésage tronconique (13) de ladite première joue (11), ledit boulon de satellite (1) étant réalisé conformément à l'une des revendications 1 à 7 précédentes,
ledit procédé étant **caractérisé par** les étapes opératoires suivantes :
a) l'extrémité (7) du boulon de satellite (1), de réalisation rétrécie, est engagée à travers le second alésage tronconique (14) de la seconde joue (12), puis insérée axialement dans le premier alésage tronconique (13) de la première joue (11), avec application de force, en vue d'instaurer un ajustement serré,
b) un élément périphérique de liaison (30) est introduit axialement, avec application de force, sur le rétrécissement (3) configuré en gradin, situé à l'extrémité évasée (2) dudit boulon de satellite (1) et logé dans ledit second alésage tronconique (14) de ladite seconde joue (12), vue d'instaurer un ajustement serré avec ledit boulon de satellite (1) et le porte-satellites (10).

12. Procédé selon la revendication 11,
**caractérisé par le fait**
**que**, lors de l'insertion du boulon de satellite (1) dans le premier alésage tronconique (13) de la première joue (11) du porte-satellites (10), de l'huile est introduite sous pression par le premier alésage d'alimentation (4) dudit boulon de satellite (1), entre la surface d'enveloppe dudit boulon de satellite (1) et la paroi intérieure dudit premier alésage tronconique (13) ; par le fait que, lors de l'insertion de l'élément périphérique de liaison (30) dans le second alésage tronconique (14) de la seconde joue (12) dudit porte-satellites (10), de l'huile est introduite sous pression par le second alésage d'alimentation (5) dudit boulon de satellite (1), entre la surface d'enveloppe extérieure dudit élément périphérique de liaison (30) et la paroi intérieure dudit second alésage tronconique (14), ainsi qu'entre la surface d'enveloppe intérieure dudit élément périphérique de liaison (30) et la surface d'enveloppe du rétrécissement (3) configuré en gradin à l'extrémité évasée (2) dudit boulon de satellite (1) ; et par le fait que l'alimentation en huile pressurisée est détendue après l'insertion dudit boulon de satellite (1) dans lesdits alésages tronconiques (13, 14) dudit porte-satellites (10).

13. Procédé selon la revendication 12,
**caractérisé par le fait**
**que**, après une sollicitation réitérée des alésages d'alimentation (4, 5) du boulon de satellite (1) par de l'huile pressurisée, l'élément périphérique de liaison (30) est extrait du second alésage tronconique (14) du porte-satellites (10), et ledit boulon de satellite (1) est ensuite extrait des alésages tronconiques (13, 14) dudit porte-satellites (10).
